# EUROPEAN PATENT SPECIFICATION

(11) **EP 4 485 671 B1**
(45) Date of publication and mention of the grant of the patent: **07.10.2026**
(21) Application number: 23921574.2
(22) Date of filing: 21.11.2023
(51) Int. Cl.: H01M 50/59, H01M 50/503, H01M 50/524, H01M 50/526, H01M 50/588, H01M 50/522, H01M 50/569, H01M 50/562, H01M 50/211, H01M 50/505

(54) **BUSBAR ASSEMBLY AND BATTERY PACK INCLUDING THE SAME**
SAMMELSCHIENENANORDNUNG UND BATTERIEPACK DAMIT
ENSEMBLE BARRE OMNIBUS ET BLOC-BATTERIE LE INCLUANT

(30) Priority: 17.05.2023 KR 20230063579
(43) Date of publication of application: 01.01.2025
(73) Proprietor: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2023/018826
(87) International publication number: WO 2024/237406

(56) References cited:
- KR-A- 20140 060 633
- KR-A- 20150 143 060
- KR-A- 20210 019 295
- KR-A- 20220 052 609
- KR-A- 20220 075 989
- KR-A- 20220 155 031
- KR-A- 20230 065 654

## Description

### [TECHNICAL FIELD]

The present disclosure relates to a busbar assembly and a battery pack including the same, and more specifically, to a busbar assembly that allows easy discharge of carbonized gas and does not require a cap, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed or thermal runaway phenomenon occurs in a battery cell, the possibility of continuous ignition or resultant explosion increases.

Meanwhile, a busbar connected to the battery module is provided inside the battery pack.

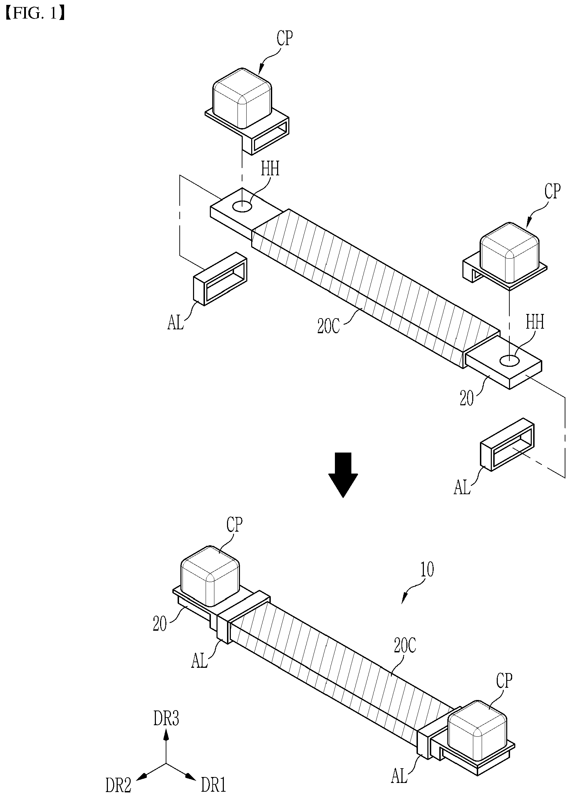

FIG. 1 is an exploded perspective view and a coupling perspective view of a conventional busbar assembly.

Referring to FIG. 1, a conventional busbar assembly 10 includes a busbar 20, a covering 20C that surrounds the busbar 20, a cap CP, and a tape AL for fixing the cap CP. The busbar 20 is a rod-shaped metal member that extends along the longitudinal direction. A through hole HH for connecting with a terminal busbar of a battery module may be formed at both end parts of the busbar 20. Such a busbar 20 is configured to be in charge of HV (High voltage) connection in the battery pack. The HV connection means a connection that serves as a power source to supply electric power, and the busbar 20 is configured to guide electrical connection of the battery module, and generally includes a metal material having excellent electrical conductivity. As an example, the busbar 20 may include a copper (Cu) material.

The covering 20C can surround the busbar 20. The covering 20C may include a material that is electrically insulating, and for example, it may include materials such as silicone or epoxy. Since the covering 20C surrounds the busbar 20 through which a high current flows, it is possible to prevent the busbar 20 from coming into contact with other electrical equipment or conductive members in addition to the terminal busbar of the battery module, thereby cutting off generation of short circuits.

A fastening member may be inserted into the through hole HH of the busbar 20 to connect the busbar 20 to the terminal busbar of the battery module. Caps CP are attached to both ends of the busbar 20 for insulation. The cap CP may be, for example, a rubber cap. The cap CP may be attached to the covering 20C using a tape AL.

However, when a flame occurs inside the battery pack, the flame has a very high temperature of approximately 1000°C, the covering 20C surrounding the busbar 20 melts, or the cap CP and tape AL melt, so that the busbar 20 can be exposed. If the exposed busbar 20 comes into contact with another conductive member to cause a short circuit, the internal flame may further spread, and the flame may propagate to the outside of the battery pack. This could ultimately lead to an explosion of the battery pack or the vehicle equipped with the battery pack.

Therefore, there is a need to develop a technology for a busbar assembly that can maintain electrical insulation properties even if a flame occurs inside the battery pack.

Documents KR 2022 0075989 A and KR 2023 0065654 A disclose busbar assemblies comprising cover plates for the busbar. Document KR 2021 0019295 A discloses a busbar with an passivated insulating layer around a central body part.

### [DETAILED DESCRIPTION OF THE INVENTION]

### [Technical Problem]

It is an object of the present disclosure to provide a busbar assembly that can maintain electrical insulation properties without being melted even if a flame occurs inside the battery pack, and a battery pack including the same.

However, the technical problems to be solved by embodiments of the present disclosure are not limited to the above-mentioned problems, and can be variously expanded within the scope of the technical idea included in the present disclosure.

### [Technical Solution]

To solve this problem, the invention provides a busbar assembly according to claim 1.

The invention also provides a busbar assembly according to claim 2.

The busbar assemblies after the invention may present one of more feature(s) of dependent claims 2 to 6, in any combination allowed by the claims.

The invention further provides a battery pack according to claim 7.
The battery pack may present one or more feature(s) of dependent claims 8 to 10, in any combination allowed by the claims.

### [Advantageous Effects]

The busbar assembly of the present disclosure includes a cover plate that can replace the cap, and thus can improve insulation properties and fire resistance.

The busbar assembly of the present disclosure can allow gas generated in the inside thereof to easily discharge to the outside when exposed to flame.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is an exploded perspective view and a coupling perspective view of a conventional busbar assembly.
FIG. 2 is a top view of a battery pack according to one embodiment.
FIG. 3 is a perspective view showing one of the battery modules included in the battery pack of FIG. 2.
FIG. 4 is a partial perspective view showing a state in which the module frame and the end plate is removed in the battery module of FIG. 3.
FIG. 5 is a perspective view of a busbar according to one embodiment.
FIG. 6 is a perspective view of a busbar provided with an insulating layer according to one embodiment.
FIG. 7 is an exploded perspective view of a busbar assembly according to one embodiment.
FIG. 8 is a plan view of a busbar assembly according to one embodiment.
FIG. 9 is a side view of a busbar assembly according to one embodiment.
FIG. 10 is a cross-sectional view of a busbar assembly according to one embodiment.
FIG. 11 is a cross-sectional view of a busbar assembly according to one embodiment.
FIG. 12 is an exploded perspective view of a busbar assembly according to one embodiment.
FIG. 13 is a plan view of a busbar assembly according to one embodiment.
FIG. 14 is a side view of a busbar assembly according to one embodiment.
FIG. 15 is a cross-sectional view of a busbar assembly according to one embodiment.
FIG. 16 is a cross-sectional view of a busbar assembly according to one embodiment.
FIG. 17 is a side view of a busbar assembly connecting battery modules according to one embodiment.
FIG. 18 is a side view of a bus bar assembly connecting battery modules according to one embodiment.
FIG. 19 is a plan view of a bus bar assembly connecting battery modules according to one embodiment.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

Further, throughout the description, a first direction DR1, a second direction DR2, and a third direction DR3 are used as relative concepts. The first direction DR1, the second direction DR2, and the third direction DR3 may perpendicularly intersect each other.

Throughout the description, the upper/lower concept has been described as being divided along the third direction DR3. Therefore, the "thickness" herein refers to the length measured in the third direction DR3.

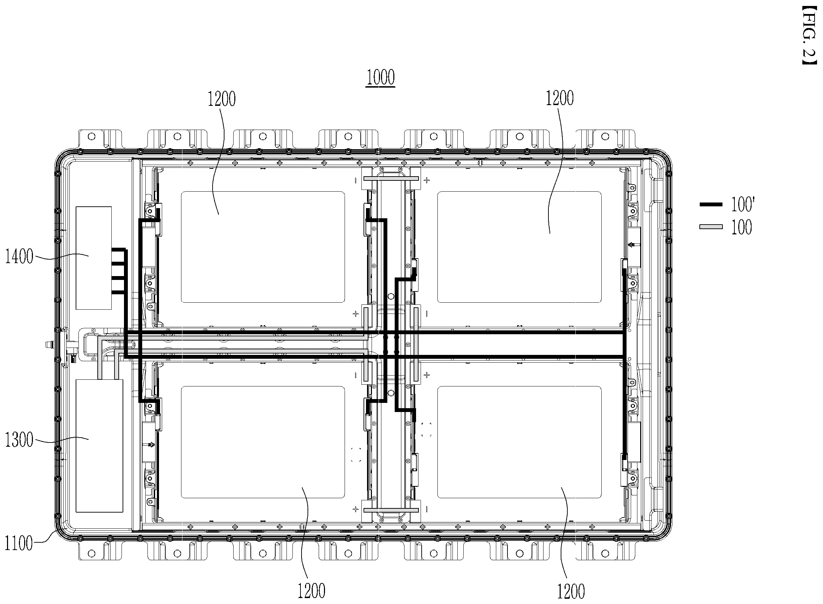

FIG. 2 is a top view of a battery pack according to one embodiment.

Referring to FIG. 2, the battery pack 1000 according to one embodiment includes a busbar assembly 100, a pack frame 1100, battery modules 1200, a BDU (battery disconnect unit) module 1300 for controlling electrical connection of the battery module 1200, and a BMS (battery management system) module 1400 that monitors and controls the operation of the battery module 1200. At least one busbar assembly 100 according to the present embodiment electrically connects at least one of between the battery modules 1200, between the battery module 1200 and the BDU module 1300, between the battery module 1200 and the BMS module 1400, and between the BDU module 1300 and the BMS module 1400. Specifically, a plurality of battery modules 1200 may be housed in the pack frame 1100, and electrical connection between the battery modules 1200 or electrical connection between the battery module 1200 and the BDU module 1300 may be made by the busbar assembly 100. That is, the busbar assembly 100 according to the present embodiment can be in charge of HV (High voltage) connection. Here, the HV connection is a power connection that serves to supply electric power requiring high voltage, and refers to a connection between battery cells or a connection between battery modules.

Meanwhile, the BDU module 1300 is a member for controlling electrical connection of the battery module 1200, and can cut off power between the power converter and the battery module 1200. When a condition occurs in which the current exceeds the set range, the BDU module 1300 can cut off electric power to the battery pack 1000 to ensure safety of the battery pack 1000.

Meanwhile, the LV connection member 100' according to the present embodiment may be in charge of electrical connection between the battery module 1200 and the BMS module 1400. The electrical connection herein is a LV (low voltage) connection, which means a sensing connection for detecting and controlling the voltage and temperature of the battery module 1200. Specifically, sensors, and the like are arranged inside the battery module 1200, and real-time temperature information or voltage information of the battery module 1200 is transmitted to a BMS module 1400 via the LV connection member 100'. It is possible to monitor and control the real-time operating status of the battery module 1200 via the BMS module 1400. Although not specifically illustrated, an HV current sensor may be integrated into the BMS module 1400. In this case, the busbar assembly according to the present embodiment may be in charge of electrical connection between the battery module 1200 and the BMS module 1400 or between the BDU module 1300 and the BMS module 1400.

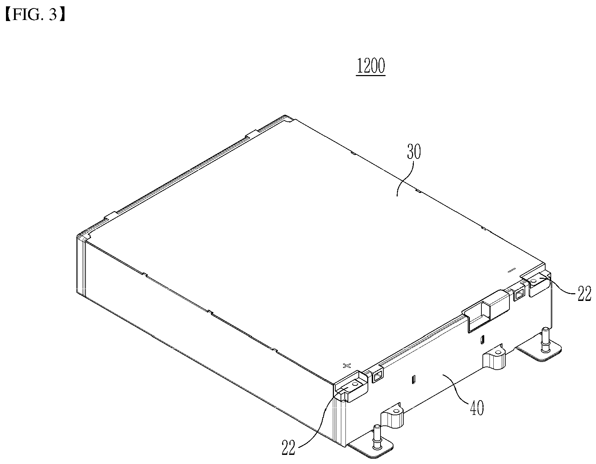

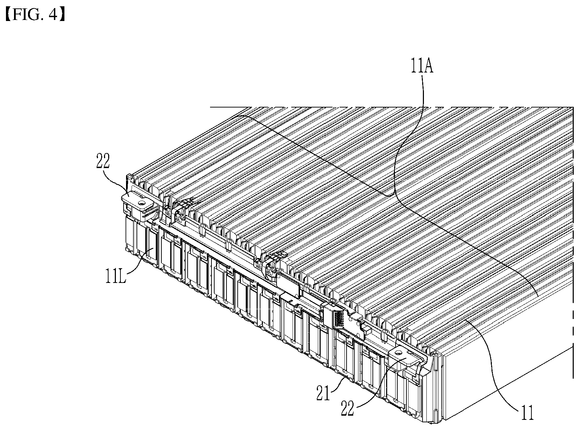

Next, the battery module 1200 according to the present embodiment will be described with reference to FIGS. 3 and 4. In this regard, the battery module 1200 described below has one exemplary structure of a battery module including a plurality of battery cells 11, and various types of battery modules including a plurality of battery cells can be applied.

FIG. 3 is a perspective view showing one of the battery modules included in the battery pack of FIG. 2.

FIG. 4 is a partial perspective view showing a state in which the module frame and the end plate are removed in the battery module of FIG. 3.

Referring to FIGS. 3 and 4, the battery module 1200 according to the present embodiment may include a battery cell stack 11A in which a plurality of battery cells 11 are stacked. The battery cell stack 11A is illustrated in FIG. 4. Such a battery cell stack 11A can be housed in the module frame 30 and the end plate 40.

The battery cell 11 may be a pouch-type battery cell. Such a pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. On the other hand, at least one electrode lead 11L may be connected to the terminal busbar 22. A portion of the terminal busbar 22 may be exposed to the outside of the battery module 1200 as illustrated in FIG. 3. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, BDU module 1300, or BMS module 1400 via the busbar assembly 100 connected to the terminal busbar 22.

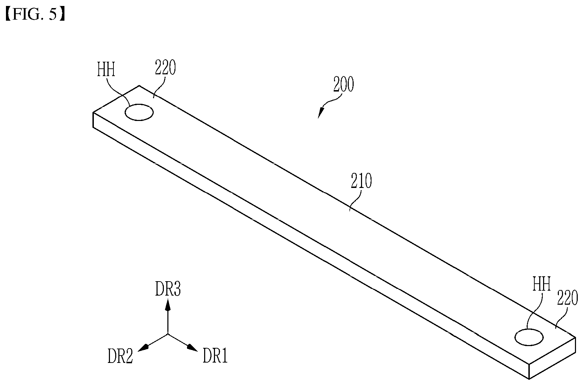

Next, a busbar assembly according to an embodiment will be described with reference to FIGS. 5 to 11.

FIG. 5 is a perspective view of a busbar according to one embodiment.

Referring to FIG. 5, the busbar 200 guides electrical connection within the battery pack 1000 (see FIG. 2). The busbar 200 is configured to guide electrical connection, that is, HV connection, of the battery module 1200 (see FIG. 2), and may include a metal material with excellent electrical conductivity. As an example, the busbar 200 may include copper (Cu) material. The body part 210 may have a rod shape extending in one direction. In FIG. 2, the busbar 200 is illustrated as having a rod shape extending in the first direction DR1 as an example.

The busbar 200 of one embodiment includes a body part 210 and an end part 220. The body part 210 may correspond to the center part of the busbar 200. The end parts 220 extend from both ends of the body part 210. For example, the end part 220 may extend in the first direction DR1 and in a direction opposite to the first direction DR1 at both ends of the body part 210. In this specification, for convenience, the busbar 200 is described as including a body part 210 and an end part 220, but the body part 210 and the end part 220 have an integrated shape.

A through hole HH is defined in the end part 220. A fastening member can be inserted into the through hole HH to connect the busbar 200 to an external electrical device. For example, a bolt can be inserted into the through hole HH of the end part 220 to connect the busbar 20 and the terminal busbar 22 (see FIG. 3) of the battery module 1200 (see FIG. 3).

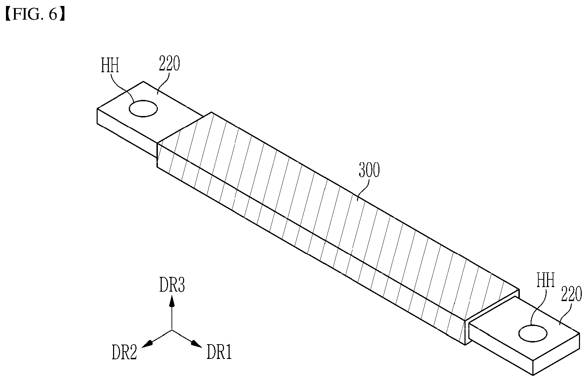

FIG. 6 is a perspective view of a busbar provided with an insulating layer according to one embodiment.

Referring to FIG. 6, the insulating layer 300 surrounds the body part 210 (see FIG. 5) of the busbar 200. That is, the insulating layer 300 may surround the outer peripheral surface of the busbar 200 excluding the end part 220 of the busbar 200. The end part 220 may be exposed from the insulating layer 300, and electrically connected to the terminal busbar 22 (see FIG. 4) of the battery module 1200.

The insulating layer 300 may include a fire resistant silicone. For example, the fire resistant silicone can be molded onto the outer peripheral surface of the body part 210 (FIG. 5) of the busbar 200 to form an insulating layer 300. The fire resistant silicone can be ceramified at high temperatures, unlike common silicone materials that are exposed to flame or burn at high temperatures. Therefore, when exposed to flame, the fire resistant silicone does not burn but is ceramified and can maintain insulation properties against the busbar 200. For example, the fire resistant silicone can be ceramified at temperatures of 500 degrees Celsius or above and 1700 degrees Celsius or below. However, the temperature range at which fire resistant silicone is ceramified is not limited thereto.

The fire resistant silicone may include silicone polymer and silica. For example, the applied silicone polymer may be a polysiloxane-based compound having a vinyl group as a functional group, and can serve as a base material for a fire resistant silicone material. For example, the applied silica may be fumed silica, which is a reinforcing filler included in the silicone polymer. A high-purity silicone chloride (SiCl₄) compound can be produced using metallic silicone as a main raw material through reaction with hydrochloric acid and purification process, and this can be reacted with hydrogen and oxygen in a high temperature flame to obtain fumed silica. Further, the fire resistant silicone may contain platinum Pt as a catalyst.

When the fire resistant silicone is exposed to flame or high heat, silica (SiO₂) is crosslinked together with decomposition of the silicone polymer to form a ceramic material. The insulating layer 300 of one embodiment including the fire resistant silicone does not burn or melt, but can be ceramified and maintain electrical insulation properties, even if exposed to flame or placed in a high-temperature environment.

Therefore, the insulating layer 300 can insulate the body part 210 (see FIG. 5) of the busbar 200 even under flames or high temperatures, thereby preventing the busbar 200 from coming into contact with other electrical equipment or conductive members and causing a short circuit.

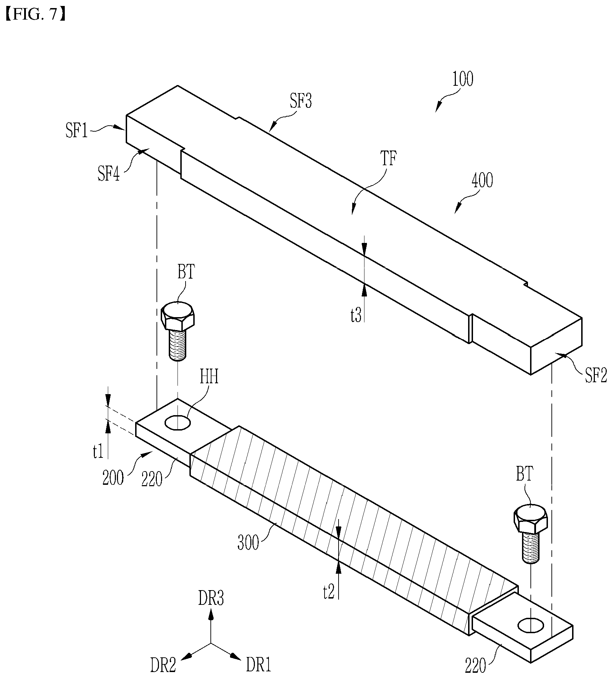

FIG. 7 is an exploded perspective view of a busbar assembly according to one embodiment.

Referring to FIG. 7, the busbar assembly 100 of one embodiment may include a busbar 200, an insulating layer 300, and a cover plate 400. In FIG. 7, a fastening member BT coupled to the end part 220 of the busbar 200 is also illustrated for convenience of explanation. A bolt is illustrated as an example of a fastening member BT.

The cover plate 400 of the present disclosure covers the insulating layer 300 and the end part 220 and has an integrated shape.

The cover plate 400 of the present disclosure may include mica. The cover plate 400 may be a thermoformed mica plate formed by thermocompression bonding using a high temperature press. The cover plate 400 is thermoformed to match with the outer shape of the busbar 200 and the insulating layer 300, and thereby can be provided in an assembled manner without a separate adhesive layer. Further, the cover plate 400 of the present disclosure maintains a strong exterior and can physically protect the internal structure as compared to soft mica tape or sheet-shaped mica.

The cover plate 400 is excellent in fire resistance, heat resistance, high temperature resistance, and electrical insulation properties, and can maintain insulation properties of the busbar assembly 100 without burning under flame or high heat. Therefore, the cover plate 400 can cut off the insulating layer 300 from being directly exposed to the flame when a flame occurs. Further, the cover plate 400 can physically protect and insulate the end part 220 and the fastening member BT coupled to the end part 220. The cover plate 400 can replace the cap CP (see FIG. 1) and tape AL included in the conventional busbar assembly 10.

The cover plate 400 of one embodiment may include a top face TF, two short side faces SF1 and SF2, and two long side faces SF3 and SF4. The cover plate 400 of one embodiment may not include a separate bottom face. Thereby, the cover plate 400 can be assembled to the busbar 200 and the insulating layer 300 in a planar direction. The shape of the cover plate 400 on a plane surface may match with the shape of the insulating layer 300 and the end part 220.

In the cover plate 400 of one embodiment, the top face TF may have a planar shape. For example, the top face TF may be a surface parallel to the plane surface formed by the first direction DR1 and the second direction DR2. The two short side faces SF1 and SF2 may be arranged in the short side direction of the busbar 200. The two long side faces SF3 and SF4 may be arranged in the long side direction of the busbar 200. The two long side faces SF3 and SF4 may be formed according to the shape of the insulating layer 300 and the end part 220. The two long side faces SF3 and SF4 are thermoformed to match with the outer shape of the busbar 200 and the insulating layer 300, so that the cover plate 400 can be coupled to the busbar 200 and the insulating layer 300 in an assembled manner without a separate adhesive layer.

Since the third height t3 of the cover plate 400 is greater than the first height t1 of the busbar 200 and the second height t2 of the insulating layer 300, the insulating layer 300 and the end part 220 can be sufficiently housed in the third direction DR3.

The bottom face of the assembled busbar assembly 100 may be exposed from the cover plate 400. The bottom face of the busbar assembly 100 may contact the terminal busbar 22 of the battery module 1200 (see FIG. 3). An explanation related to this will be provided later.

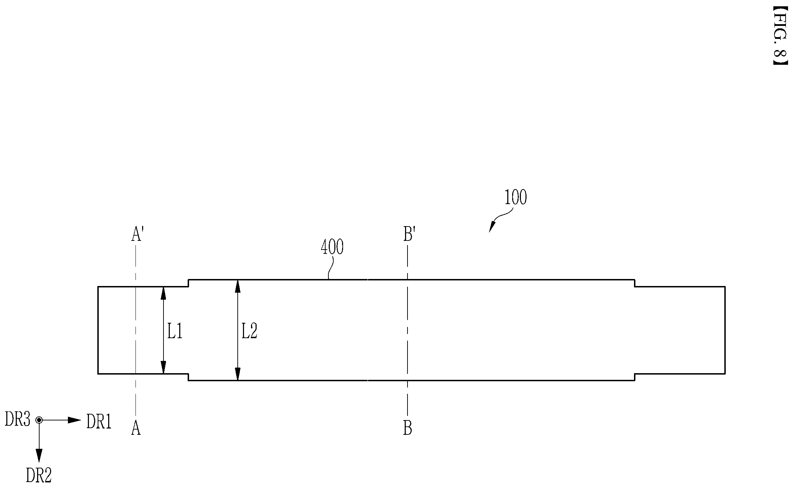

FIG. 8 is a plan view of a busbar assembly according to one embodiment.

Referring to FIG. 8, the shape of the busbar assembly 100 on a plane surface may be the shape of the cover plate 400 on a plane surface. The shape of the cover plate 400 on a plane surface may be provided along the outer contour of the insulating layer 300 and the end part 220. The cover plate 400 may have a first width L1 and a second width L2 on a plane surface. The first width L1 may be a length to cover the end part 220 (see FIG. 7). The second width L2 may be a length to cover the insulating layer 300 (see FIG. 7). The second width L2 may be larger than the first width L1. Meanwhile, the width herein may be the length measured in the second direction DR2.

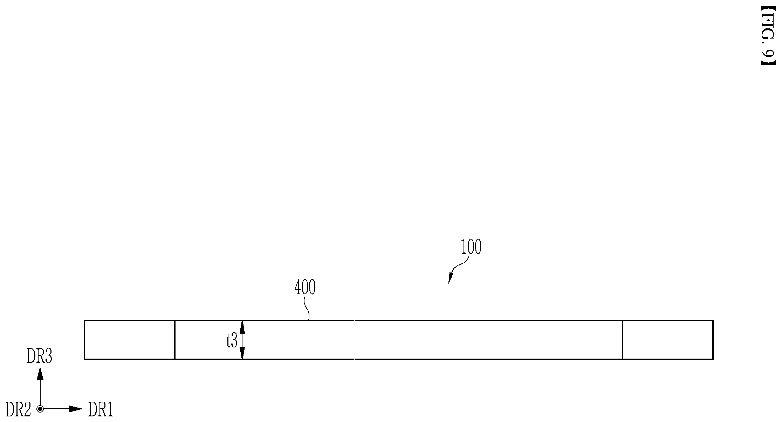

FIG. 9 is a side view of a busbar assembly according to one embodiment.

Referring to FIG. 9, the shape of the busbar assembly 100 on a side surface may be the shape of the cover plate 400 on a side surface. The cover plate 400 of one embodiment on a side surface may have a rectangular shape. The thickness of the cover plate 400 may be a third thickness t3. Specifically, the cover plate 400 may have a constant thickness along the first longitudinal direction DR1.

Referring to FIGS. 7, 8 and 9 together, the busbar assembly 100 of one embodiment may be assembled by fitting the cover plate 400 to the shape of the insulating layer 300 and the end part 220 on a plane surface.

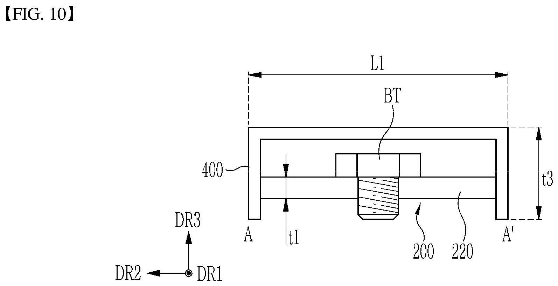

FIG. 10 is a cross-sectional view of a busbar assembly according to one embodiment.

Referring to FIG. 10, in the cross section corresponding to the A-A' cutting line, the inner surface of the cover plate 400 may contact the end part 220. Specifically, the cover plate 400 may contact the side face of the end part 220. Since the third height t3 of the cover plate 400 is greater than the first height t1 of the end 220, the cover plate 400 can sufficiently house the end part 220 and the bolt BT therein. The terminal busbar 22 (see FIG. 3) of the battery module 1200 (see FIG. 3) may be coupled to the end 220 and the lower part of the bolt BT.

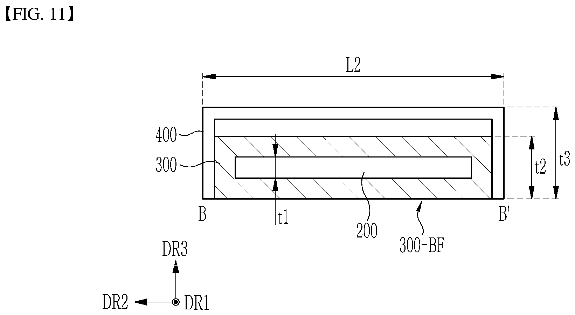

FIG. 11 is a cross-sectional view of a busbar assembly according to one embodiment.

Referring to FIG. 11, in the cross section corresponding to the B-B' cutting line, the inner surface of the cover plate 400 may contact the insulating layer 300. Specifically, the inner surface of the cover plate 400 may contact the side face of the insulating layer 300. Since the third height t3 of the cover plate 400 is greater than the second height t2 of the insulating layer 300, the cover plate 400 can sufficiently house the busbar 200 and the insulating layer 300 therein.

Referring to FIGS. 10 and 11 together, the cover plate 400 of the present disclosure has a first width L1 and a second width L2 that are different from each other on a plane surface. The first width L1 is a width that takes the outer shape of the end part 220 of the busbar 200 into consideration, and the second width L2 is a width that takes the outer shape of the insulating layer 300 into consideration. Thereby, the cover plate 400 can be fitted and coupled to the busbar 200 and the insulating layer 300 on a plane surface without a separate adhesive layer.

Meanwhile, the embodiment of the cover plate 400 is not limited thereto.

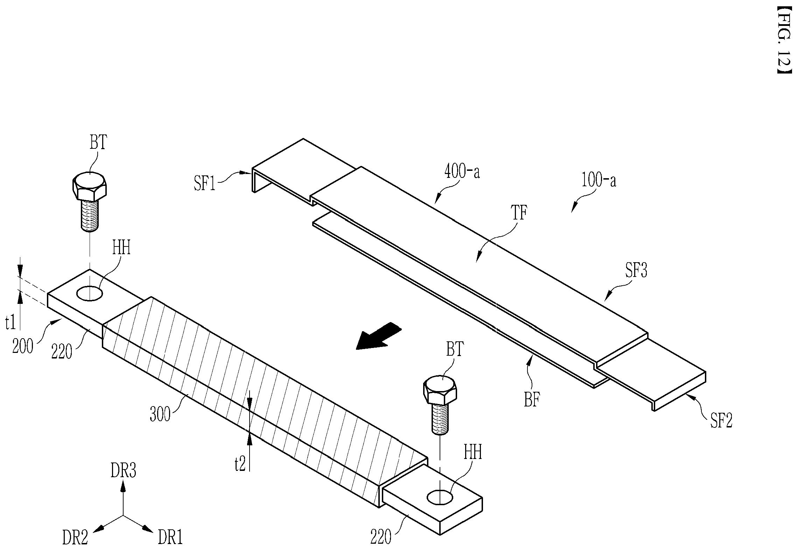

FIG. 12 is an exploded perspective view of a busbar assembly according to one embodiment.

Referring to FIG. 12, the busbar assembly 100-a of one embodiment may include a busbar 200, an insulating layer 300, and a cover plate 400-a. In FIG. 12, a fastening member BT coupled to the end part 220 of the busbar 200 is also illustrated for convenience of explanation. A bolt is illustrated as an example of a fastening member BT.

The cover plate 400-a shown in FIG. 12 may have a different shape from the cover plate 400 shown in FIG. 7. Specifically, the cover plate 400-a of one embodiment may match with the shape of the insulating layer 300 and the end part 220 on a side surface.

The cover plate 400-a of one embodiment may include a top face TF, two short side faces SF1 and SF2, one long side face SF3, and a bottom face BF. That is, the cover plate 400-a has a structure in which one long side face SF4 (see FIG. 7) is omitted, and can further include a bottom face BF, as compared to the cover plate 400 shown in FIG. 7. Thereby, the cover plate 400-a can be coupled to the busbar 200 and the insulating layer 300 in the side face direction in an assembled manner. The shape of the cover plate 400 on a plane surface may match with the shape of the insulating layer 300 and the end part 220.

In the cover plate 400-a of one embodiment, the top face TF may be formed along the shape of the insulating layer 300 and the end part 220. Specifically, the top face TF may be formed to include a step along the top face of the insulating layer 300 and the top face of the end part 220. The two short side faces SF1 and SF2 may be arranged in the short side direction of the busbar 200. One long side faces SF3 may be arranged in the long side direction of the busbar 200. In one embodiment, one long side face SF3 may cover one side face of the insulating layer 300 and the end part 220. The bottom face BF may cover the bottom face of the insulating layer 300. The bottom face of the end part 220 of the busbar 200 is exposed from the cover plate 400 and may contact the terminal busbar 22 of the battery module 1200 (see FIG. 3).

One side face of the cover plate 400-a of one embodiment is omitted, and the top face TF is thermoformed to match with the outer shape of the busbar 200 and the insulating layer 300, and therefore, can be coupled to the busbar 200 and the insulating layer 300 in the side face direction in an assembled manner. That is, the cover plate 400-a can be fastened to the bus bar 200 and the insulating layer 300 without requiring a separate adhesive layer.

In addition, the material, formation method, insulating properties, and heat resistance properties of the cover plate 400-a may be similarly applied to the description of the cover plate 400 described above with reference to FIG. 7.

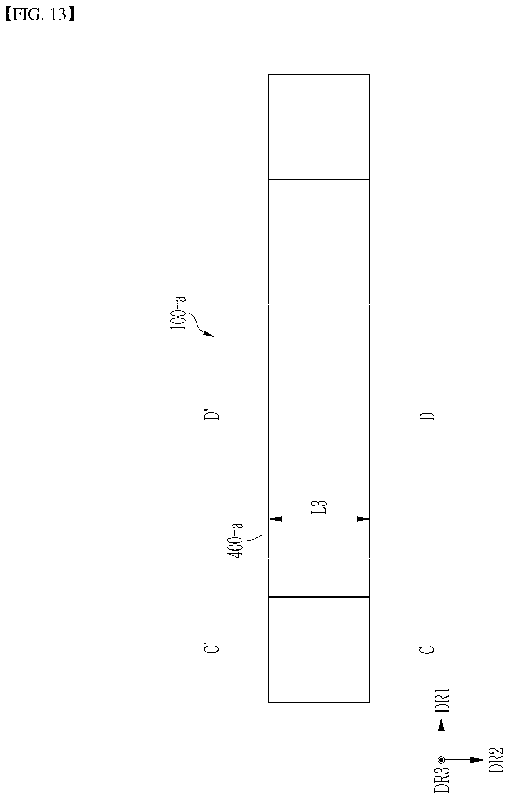

FIG. 13 is a plan view of a busbar assembly according to one embodiment.

Referring to FIG. 13, the shape of the busbar assembly 100-a on a plane surface may be the shape of the cover plate 400-a on a plane surface. The cover plate 400-a on a plane surface may have a rectangular shape. At this time, the cover plate 400-a may have a third width L3. Specifically, the cover plate 400-a may have a constant width along the first direction DR1, which is the longitudinal direction.

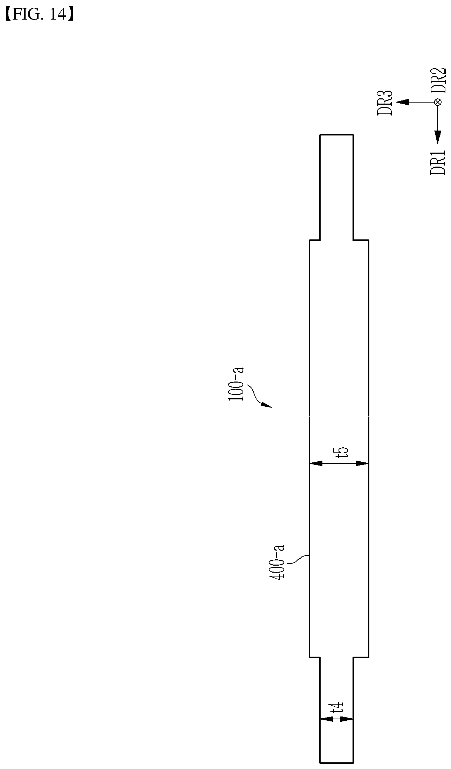

FIG. 14 is a side view of a busbar assembly according to one embodiment.

Referring to FIG. 14, the shape of the busbar assembly 100-a on a side surface may be the shape of the cover plate 400-a on a side surface. The shape of the cover plate 400-a on a side surface may be provided along the outer contour of the insulating layer 300 and the end part 220. The cover plate 400-a may have a fourth thickness t4 and a fifth thickness t5 on a side surface. The fourth thickness t4 may be a thickness to cover the end part 220 (see FIG. 12) and the bolt BT. The fifth thickness t5 may be a length to cover the insulating layer 300 (see FIG. 12). The fifth thickness t5 may be greater than the fourth thickness t4.

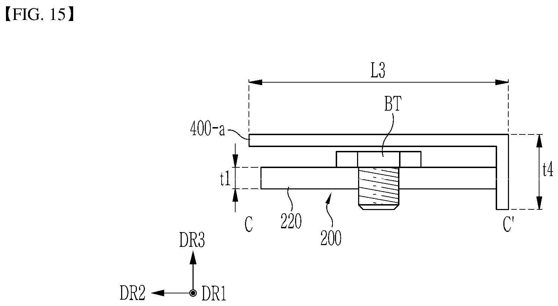

FIG. 15 is a cross-sectional view of a busbar assembly according to one embodiment.

Referring to FIG. 15, in the cross section corresponding to the C-C' cutting line, the inner surface of the cover plate 400-a may be spaced apart from the end part 220 by a predetermined gap GP in the second direction DR2. Since the cover plate 400-a includes only one long side face SF3 (see FIG. 12), one side face of the end part 220 may be exposed from the cover plate 400-a. Meanwhile, since one side face of the exposed end part 220 is assembled to face the battery module 1200 (see FIG. 3), it can be physically protected from external flame.

An end part 220 and a bolt BT can be housed inside the cover plate 400-a. Since the fourth height t4 of the cover plate 400-a is greater than the first height t1 of the end 220, the cover plate 400-a can sufficiently house the end part 220 and the bolt BT therein. The terminal busbar 22 (see FIG. 3) of the battery module 1200 (see FIG. 3) may be coupled to the end part 220 and the lower part of the bolt BT.

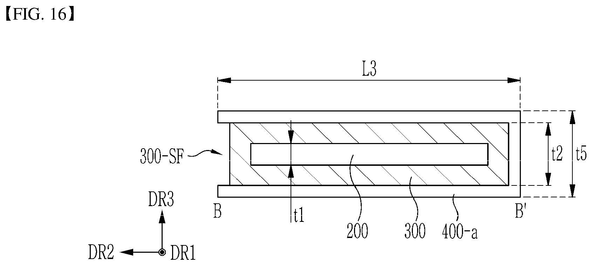

FIG. 16 is a cross-sectional view of a busbar assembly according to one embodiment.

Referring to FIG. 16, in the cross section corresponding to the D-D' cutting line, the inner surface of the cover plate 400-a may contact the insulating layer 300. Specifically, the inner surface of the cover plate 400-a may contact one side face of the insulating layer 300. Since the cover plate 400-a includes only one long side face SF3 (see FIG. 12), one side face 300-SF of the insulating layer 300 may be exposed from the cover plate 400-a. As one side face 300-SF of the insulating layer 300 is exposed, gas generated in the insulating layer 300 can be easily discharged to the outside when a flame occurs inside.

Meanwhile, since the cover plate 400-a is inserted into the insulating layer 300 and the busbar 200 on the side surface, the inner surface of the cover plate 400-a may contact the insulating layer 300 in the third direction DR3. Therefore, the fifth thickness t5 of the cover plate 400-a may be set in consideration of the second thickness t2 of the insulating layer 300.

Referring to FIGS. 12, 15 and 16 together, the cover plate 400-a of the present disclosure includes only one long side face SF3 (see FIG. 12), and other long side surface is omitted, and may be fit into the insulating layer 300 and the busbar 200 in the lateral direction. Further, the cover plate 400-a has a fourth thickness t4 and a fifth thickness t5 that are different from each other on the side surface. The fourth thickness t4 is a thickness for housing the end part 220 and the bolt BT of the busbar 200, and the fifth thickness t5 is a thickness that takes the outer shape of the insulating layer 300 into consideration. Thereby, the cover plate 400-a can be fitted and coupled to the busbar 200 and the insulating layer 300 without a separate adhesive layer on the side face.

The cover plate 400-a of the present disclosure extends and covers from the insulating layer 300 to the end part 220 of the busbar 200, thereby improving the fire resistance and insulation properties of the busbar assembly 100 without a separate cap.

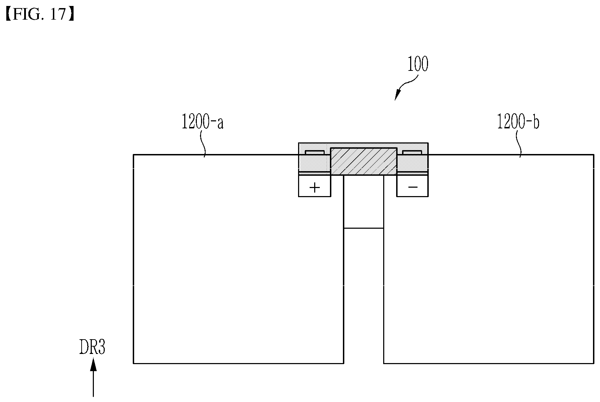

FIG. 17 is a side view of a busbar assembly connecting battery modules according to one embodiment.

Referring to FIG. 17, the busbar assembly 100 of one embodiment may electrically connect adjacent first battery module 1200-a and second battery module 1200-b. The busbar assembly 100 includes a cover plate 400 (see FIG. 7) of one embodiment. As described above with reference to FIGS. 7 to 11, the lower surface of the busbar assembly 100 is exposed from the cover plate 400 (see FIG. 7), and thus can be electrically connected to the first battery module 1200-a and the second battery module 1200-b.

When the busbar assembly 100 is exposed to flame or reaches a high temperature, gas may be generated from the insulating layer 300 (see FIG. 7). The gas generated in the insulating layer 300 can accelerate the internal flame, and impairs the structural stability of the busbar assembly 100, thereby adversely affecting the insulation performance of the busbar 200. Further, the gas generated in the insulating layer 300 may contain carbonized components, however, if the carbonized components are accumulated in the inside, it may adversely affect electrical insulation properties. Since the lower surface of the busbar assembly 100 of the present disclosure is exposed from the cover plate 400 (see FIG. 7), gas generated in the insulating layer 300 can be easily discharged to the outside.

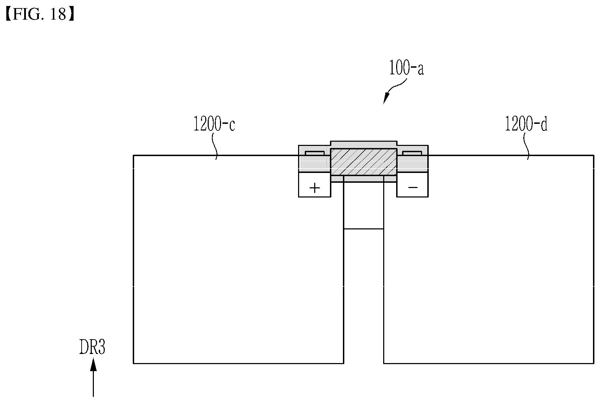

FIG. 18 is a side view of a bus bar assembly connecting battery modules according to one embodiment.

Referring to FIG. 18, the busbar assembly 100-a of one embodiment may electrically connect adjacent third battery module 1200-c and fourth battery module 1200-d. The busbar assembly 100-a includes a cover plate 400-a (see FIG. 12) of one embodiment, so that the lower surface may be electrically connected to the third battery module 1200-c and the fourth battery module 1200-d.

As described above in FIGS. 12 to 16, one side face of the busbar assembly 100-a may be exposed from the cover plate 400-a (see FIG. 12). One exposed side face of the busbar assembly 100-a is assembled to face the third battery module 1200-c and the fourth battery module 1200-d, so that it can be physically protected from external flame. Further, since one exposed side face of the busbar assembly 100-a is protected from external flame, gas generated inside the busbar assembly 100-a can be discharged to the outside.

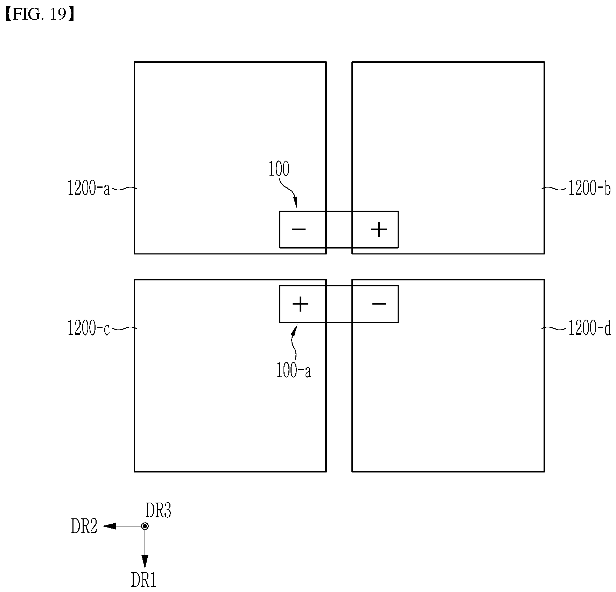

FIG. 19 is a plan view of a bus bar assembly connecting battery modules according to one embodiment.

In FIG. 19, first to fourth battery modules 1200-a, 1200-b, 1200-c and 1200-d, a first busbar assembly 100, and a second busbar assembly 100-a are illustrated. FIG. 19 illustrates that the first battery module 1200-a and second battery module 1200-b described above in FIG. 17 are arranged to face the third battery module 1200-c and fourth battery module 1200-d described above in FIG. 18. The first busbar assembly 100 is the busbar assembly 100 described above in FIG. 17. The second busbar assembly 100-a is the busbar assembly 100-a described above in FIG. 18.

Referring to FIG. 19, when two busbar assemblies 100 and 100-a are arranged adjacent to each other, one of the two is the case where the busbar assembly 100 shown in FIG. 7 may be applied, and the other is the case where the busbar assembly 100-a shown in FIG. 12 may be applied. That is, the first busbar assembly 100 has a structure where the lower surface is exposed from the cover plate 400 (see FIG. 7), and the second busbar assembly 100-a has a structure in which one side is exposed from the cover plate 400-a (see FIG. 12). Thereby, one side of the cover plate 400 (see FIG. 7) is arranged between the two busbar assemblies 100 and 100-a, thereby preventing short circuits from occurring.

Further, the exposed lower surface of the first busbar assembly 100 faces the first battery module 1200-a and the second battery module 1200-b. Therefore, the gas discharged from the first busbar assembly 100 during flame may not directly affect the second busbar assembly 100-a. Further, one exposed side face of the second busbar assembly 100-a is arranged to face the third battery module 1200-c and the fourth battery module 1200-d. Therefore, the gas discharged from the second busbar assembly 100-a during flame may not directly affect the first busbar assembly 100.

The busbar assembly of the present disclosure includes a cover plate that can replace the cap, so that insulation properties and fire resistance can be improved. In addition, the busbar assembly of the present disclosure can allow the gas generated in the inside thereof to be easily discharged to the outside when exposed to flame, while maintaining the fire resistance, insulation, and stability of adjacent busbar assemblies, and preventing the spread of flame.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100, 100-a: busbar assembly
200: busbar
300: insulating layer
400,400-a: cover plate
1000: battery pack
1100: pack frame
1200: battery module
1300: BDU module
1400: BMS module

## Claims

1. A busbar assembly (100) comprising:
a busbar (200) including a body part (210) and end parts (220) extending from both ends of the body part (210) and defining a through hole (HH);
an insulating layer (300) that surrounds the body part (210); and
a cover plate (400) that covers the insulating layer (300) and the end part (220),
**characterized in that** the cover plate (400) has an integrated shape, wherein the cover plate (400) is thermoformed to match with the outer shape of the busbar (200) and the insulating layer (300), and is assembled thereon without a separate adhesive layer,
wherein the shape of the cover plate (400), in a surface viewed from the upper side, is provided along the outer contour of the insulating layer (300) and the end parts (220).

2. A busbar assembly (100-a) comprising:
a busbar (200) including a body part (210) and end parts (220) extending from both ends of the body part (210) and defining a through hole (HH);
an insulating layer (300) that surrounds the body part (210); and
a cover plate (400-a) that covers the insulating layer (300) and the end part (220),
**characterized in that** the cover plate (400-a) has an integrated shape, wherein the cover plate (400-a) is thermoformed to match with the outer shape of the busbar (200) and the insulating layer (300), and is assembled thereon without a separate adhesive layer,
wherein the shape of the cover plate (400-a) in a vertical cross-section viewed from the side, is provided along the outer contour of the insulating layer (300) and the end parts (220).

3. The busbar assembly according to claim 1 or 2, wherein:
the cover plate (400, 400-a) exposes one surface of the insulating layer (300).

4. The busbar assembly according to claim 1, wherein:
the cover plate (400) includes,
a top face (TF);
two short side faces (SF1, SF2) arranged in a short side direction of the busbar (200); and
two long side faces (SF3, SF4) arranged in the long side direction of the busbar (200) and formed along the shape of the insulating layer (300) and the end part (220).

5. The busbar assembly according to claim 2, wherein:
the cover plate (400-a) includes,
a top face (TF) formed along the shape of the insulating layer (300) and the end part (220);
two short side faces (SF1, SF2) arranged in a short side direction of the busbar (200);
one long side face (SF3) arranged in the long side direction of the busbar (200); and
a bottom face (BF) that faces the top face (TF) and formed along the shape of the insulating layer (300).

6. The busbar assembly according to claim 1 or 2, wherein:
the insulating layer (300) is ceramified at high temperature of 500 degrees Celsius or above and 1700 degrees Celsius or below.

7. A battery pack (1000) comprising:
at least one busbar assembly (100, 100-a) as set forth in any one of claims 1 to 6;
battery modules (1200);
a BDU (battery disconnect unit) module (1300) for controlling electrical connection of the battery modules (1200); and
a BMS (Battery Management System) module (1400) that monitors and controls the operation of the battery module (1200),
wherein the at least one busbar assembly (100, 100-a) electrically connects to at least one of between the battery modules (1200), between the battery module (1200) and the BDU module (1300), between the battery module (1200) and the BMS module (1400), and between the BDU module (1300) and the BMS module (1400).

8. The battery pack according to claim 7,
further comprising a fastening part (BT) coupled to the through hole (HH) of the at least one busbar assembly (100, 100-a),
wherein the cover plate (400, 400-a) covers the fastening part (BT).

9. The battery pack according to claim 7, wherein:
the battery modules (1200) include a first battery module, a second battery module adjacent to the first battery module, a third battery module facing the first battery module, and a fourth battery module adjacent to the third battery module and facing the second battery module,
the at least one busbar assembly (100, 100-a) includes a first busbar assembly (100) that connects the first battery module and the second battery module, and a second busbar assembly (100-a) that connects the third battery module and the fourth battery module and facing the first busbar,
the first busbar assembly (100) is configured such that a bottom face is exposed from the cover plate (400), and
the second bus bar assembly (100-a) is configured such that one side face is exposed from the cover plate (400-a).

10. The battery pack according to claim 9, wherein:
the exposed bottom face of the first busbar assembly (100) faces the first battery module and the second battery module, and
the exposed one side face of the second busbar assembly (100-a) faces the third battery module and the fourth battery module.

## Patentansprüche

1. Sammelschienenanordnung (100), umfassend:
eine Sammelschiene (200), die einen Körperteil (210) und Endteile (220) enthält, die sich von beiden Enden des Körperteils (210) erstrecken und ein Durchgangsloch (HH) definieren;
eine Isolierschicht (300), die den Körperteil (210) umgibt; und
eine Abdeckplatte (400), die die Isolierschicht (300) und den Endteil (220) abdeckt,
**dadurch gekennzeichnet, dass** die Abdeckplatte (400) eine integrierte Form aufweist, wobei die Abdeckplatte (400) thermogeformt ist, um mit der äußeren Form der Sammelschiene (200) und der Isolierschicht (300) übereinzustimmen, und darauf ohne eine separate Klebeschicht montiert ist,
wobei die Form der Abdeckplatte (400) in einer von der Oberseite gesehenen Oberfläche entlang der Außenkontur der Isolierschicht (300) und der Endteile (220) vorgesehen ist.

2. Sammelschienenanordnung (100-a), umfassend:
eine Sammelschiene (200), die einen Körperteil (210) und Endteile (220) enthält, die sich von beiden Enden des Körperteils (210) erstrecken und ein Durchgangsloch (HH) definieren;
eine Isolierschicht (300), die den Körperteil (210) umgibt; und
eine Abdeckplatte (400-a), die die Isolierschicht (300) und den Endteil (220) abdeckt,
**dadurch gekennzeichnet, dass** die Abdeckplatte (400-a) eine integrierte Form aufweist, wobei die Abdeckplatte (400-a) thermogeformt ist, um mit der äußeren Form der Sammelschiene (200) und der Isolierschicht (300) übereinzustimmen, und darauf ohne eine separate Klebeschicht montiert ist,
wobei die Form der Abdeckplatte (400-a) in einem von der Seite gesehenen vertikalen Querschnitt entlang der Außenkontur der Isolierschicht (300) und der Endteile (220) vorgesehen ist.

3. Sammelschienenanordnung nach Anspruch 1 oder 2, wobei:
die Abdeckplatte (400, 400-a) eine Oberfläche der Isolierschicht (300) freilegt.

4. Sammelschienenanordnung nach Anspruch 1, wobei:
die Abdeckplatte (400) enthält:
eine Oberseite (TF);
zwei kurze Seitenflächen (SF1, SF2), die in einer Kurzseitenrichtung der Sammelschiene (200) angeordnet sind; und
zwei lange Seitenflächen (SF3, SF4), die in der Längsseitenrichtung der Sammelschiene (200) angeordnet und entlang der Form der Isolierschicht (300) und des Endteils (220) ausgebildet sind.

5. Sammelschienenanordnung nach Anspruch 2, wobei:
die Abdeckplatte (400-a) enthält:
eine Oberseite (TF), die entlang der Form der Isolierschicht (300) und des Endteils (220) ausgebildet ist;
zwei kurze Seitenflächen (SF1, SF2), die in einer Kurzseitenrichtung der Sammelschiene (200) angeordnet sind;
eine lange Seitenfläche (SF3), die in der Längsseitenrichtung der Sammelschiene (200) angeordnet ist; und
eine Unterseite (BF), die der Oberseite (TF) gegenüberliegt und entlang der Form der Isolierschicht (300) ausgebildet ist.

6. Sammelschienenanordnung nach Anspruch 1 oder 2, wobei:
die Isolierschicht (300) bei einer hohen Temperatur von 500 Grad Celsius oder darüber und 1700 Grad Celsius oder darunter keramisiert wird.

7. Batteriepack (1000), umfassend:
mindestens eine Sammelschienenanordnung (100, 100-a) nach einem der Ansprüche 1 bis 6;
Batteriemodule (1200);
ein Modul einer Batterietrenneinheit (BDU-Modul) (1300) zum Steuern der elektrischen Verbindung der Batteriemodule (1200); und
ein Modul eines Batteriemanagementsystems (BMS-Modul) (1400), das den Betrieb des Batteriemoduls (1200) überwacht und steuert,
wobei die mindestens eine Sammelschienenanordnung (100, 100-a) elektrisch mit mindestens einem von zwischen den Batteriemodulen (1200), zwischen dem Batteriemodul (1200) und dem BDU-Modul (1300), zwischen dem Batteriemodul (1200) und dem BMS-Modul (1400) sowie zwischen dem BDU-Modul (1300) und dem BMS-Modul (1400) verbunden ist.

8. Batteriepack nach Anspruch 7,
ferner umfassend ein Befestigungsteil (BT), das mit dem Durchgangsloch (HH) der mindestens einen Sammelschienenanordnung (100, 100-a) gekoppelt ist,
wobei die Abdeckplatte (400, 400-a) das Befestigungsteil (BT) abdeckt.

9. Batteriepack nach Anspruch 7, wobei:
die Batteriemodule (1200) ein erstes Batteriemodul, ein zweites Batteriemodul, das dem ersten Batteriemodul benachbart ist, ein drittes Batteriemodul, das dem ersten Batteriemodul gegenüberliegt, und ein viertes Batteriemodul, das dem dritten Batteriemodul benachbart ist und dem zweiten Batteriemodul gegenüberliegt, enthalten,
die mindestens eine Sammelschienenanordnung (100, 100-a) eine erste Sammelschienenanordnung (100), die das erste Batteriemodul und das zweite Batteriemodul verbindet, und eine zweite Sammelschienenanordnung (100-a), die das dritte Batteriemodul und das vierte Batteriemodul verbindet und der ersten Sammelschiene gegenüberliegt, enthält,
die erste Sammelschienenanordnung (100) so konfiguriert ist, dass eine Unterseite von der Abdeckplatte (400) freigelegt ist, und
die zweite Sammelschienenanordnung (100-a) so konfiguriert ist, dass eine Seitenfläche von der Abdeckplatte (400-a) freigelegt ist.

10. Batteriepack nach Anspruch 9, wobei:
die freigelegte Unterseite der ersten Sammelschienenanordnung (100) dem ersten Batteriemodul und dem zweiten Batteriemodul gegenüberliegt, und
die freigelegte eine Seitenfläche der zweiten Sammelschienenanordnung (100-a) dem dritten Batteriemodul und dem vierten Batteriemodul gegenüberliegt.

## Revendications

1. Un ensemble de barres omnibus (100) comprenant :
une barre omnibus (200) incluant une partie de corps (210) et des parties d'extrémité (220) s'étendant depuis les deux extrémités de la partie de corps (210) et définissant un trou traversant (HH) ;
une couche isolante (300) qui entoure la partie de corps (210) ; et
une plaque de recouvrement (400) qui recouvre la couche isolante (300) et la partie d'extrémité (220),
**caractérisé en ce que** la plaque de recouvrement (400) a une forme intégrée, dans lequel la plaque de recouvrement (400) est thermoformée pour correspondre à la forme extérieure de la barre omnibus (200) et de la couche isolante (300), et est assemblée sur celles-ci sans couche adhésive séparée,
dans lequel la forme de la plaque de recouvrement (400), dans une surface vue depuis le côté supérieur, est prévue le long du contour extérieur de la couche isolante (300) et des parties d'extrémité (220).

2. Un ensemble de barres omnibus (100-a) comprenant :
une barre omnibus (200) incluant une partie de corps (210) et des parties d'extrémité (220) s'étendant depuis les deux extrémités de la partie de corps (210) et définissant un trou traversant (HH) ;
une couche isolante (300) qui entoure la partie de corps (210) ; et
une plaque de recouvrement (400-a) qui recouvre la couche isolante (300) et la partie d'extrémité (220),
**caractérisé en ce que** la plaque de recouvrement (400-a) a une forme intégrée, dans lequel la plaque de recouvrement (400-a) est thermoformée pour correspondre à la forme extérieure de la barre omnibus (200) et de la couche isolante (300), et est assemblée sur celles-ci sans couche adhésive séparée,
dans lequel la forme de la plaque de recouvrement (400-a) dans une coupe transversale verticale vue de côté, est prévue le long du contour extérieur de la couche isolante (300) et des parties d'extrémité (220).

3. L'ensemble de barres omnibus selon la revendication 1 ou 2, dans lequel :
la plaque de recouvrement (400, 400-a) expose une surface de la couche isolante (300).

4. L'ensemble de barres omnibus selon la revendication 1, dans lequel :
la plaque de recouvrement (400) inclut,
une face supérieure (TF) ;
deux faces latérales courtes (SF1, SF2) agencées dans une direction du côté court de la barre omnibus (200) ; et
deux faces latérales longues (SF3, SF4) agencées dans la direction du côté long de la barre omnibus (200) et formées le long de la forme de la couche isolante (300) et de la partie d'extrémité (220).

5. L'ensemble de barres omnibus selon la revendication 2, dans lequel :
la plaque de recouvrement (400-a) inclut,
une face supérieure (TF) formée le long de la forme de la couche isolante (300) et de la partie d'extrémité (220) ;
deux faces latérales courtes (SF1, SF2) agencées dans une direction du côté court de la barre omnibus (200) ;
une face latérale longue (SF3) agencée dans la direction du côté long de la barre omnibus (200) ; et
une face inférieure (BF) qui fait face à la face supérieure (TF) et formée le long de la forme de la couche isolante (300).

6. L'ensemble de barres omnibus selon la revendication 1 ou 2, dans lequel :
la couche isolante (300) est céramifiée à haute température de 500 degrés Celsius ou plus et de 1700 degrés Celsius ou moins.

7. Un bloc-batterie (1000) comprenant :
au moins un ensemble de barres omnibus (100, 100-a) tel que présenté dans l'une quelconque des revendications 1 à 6 ;
des modules de batterie (1200) ;
un module d'unité de déconnexion de batterie (BDU) (1300) pour commander la connexion électrique des modules de batterie (1200) ; et
un module de système de gestion de batterie (BMS) (1400) qui surveille et commande le fonctionnement du module de batterie (1200),
dans lequel l'au moins un ensemble de barres omnibus (100, 100-a) se connecte électriquement à au moins l'un d'entre les modules de batterie (1200), entre le module de batterie (1200) et le module BDU (1300), entre le module de batterie (1200) et le module BMS (1400), et entre le module BDU (1300) et le module BMS (1400).

8. Le bloc-batterie selon la revendication 7,
comprenant en outre une pièce de fixation (BT) couplée au trou traversant (HH) de l'au moins un ensemble de barres omnibus (100, 100-a),
dans lequel la plaque de recouvrement (400, 400-a) recouvre la pièce de fixation (BT).

9. Le bloc-batterie selon la revendication 7, dans lequel :
les modules de batterie (1200) incluent un premier module de batterie, un deuxième module de batterie adjacent au premier module de batterie, un troisième module de batterie faisant face au premier module de batterie, et un quatrième module de batterie adjacent au troisième module de batterie et faisant face au deuxième module de batterie,
l'au moins un ensemble de barres omnibus (100, 100-a) inclut un premier ensemble de barres omnibus (100) qui connecte le premier module de batterie et le deuxième module de batterie, et un deuxième ensemble de barres omnibus (100-a) qui connecte le troisième module de batterie et le quatrième module de batterie et faisant face à la première barre omnibus,
le premier ensemble de barres omnibus (100) est configuré de telle sorte qu'une face inférieure est exposée depuis la plaque de recouvrement (400), et
le deuxième ensemble de barres omnibus (100-a) est configuré de telle sorte qu'une face latérale est exposée depuis la plaque de recouvrement (400-a).

10. Le bloc-batterie selon la revendication 9, dans lequel :
la face inférieure exposée du premier ensemble de barres omnibus (100) fait face au premier module de batterie et au deuxième module de batterie, et
l'une face latérale exposée du deuxième ensemble de barres omnibus (100-a) fait face au troisième module de batterie et au quatrième module de batterie.
